(19) Europäisches Patentamt
European Patent Office
Office européen des brevets

(11) EP 0 599 717 B1

(12) **FASCICULE DE BREVET EUROPEEN**

(45) Date de publication et mention
de la délivrance du brevet:
**12.05.1999 Bulletin 1999/19**

(51) Int. Cl.$^6$: **C01F 17/00**, B01J 23/10,
C10L 1/12, C10L 10/00,
C10L 10/06

(21) Numéro de dépôt: **93402828.3**

(22) Date de dépôt: **22.11.1993**

(54) **Agrégat de cristallites d'oxyde cérique, procédé d'obtention et son utilisation pour réduire les résidus de combustion**

Aggregate von Cerium-Oxid-Kristalliten, Verfahren zu dessen Herstellung und Verwendung zur Reduktion von Verbrennungsabfällen

Aggregate of cristallites of cerium oxide, process for obtaining it and use in the reduction of combustion residues

(84) Etats contractants désignés:
**AT BE CH DE DK ES FR GB GR IE IT LI LU NL PT SE**

(30) Priorité: **25.11.1992 FR 9214158**

(43) Date de publication de la demande:
**01.06.1994 Bulletin 1994/22**

(73) Titulaire: **RHODIA CHIMIE**
**92408 Courbevoie Cédex (FR)**

(72) Inventeurs:
• **Lemaire, Jacques**
**F-95520 Osny (FR)**
• **Petta, Denis**
**F-69008 Lyon (FR)**
• **Touret, Olivier**
**F-93300 Aubervilliers (FR)**

(74) Mandataire:
**Seugnet, Jean Louis et al**
**RHODIA SERVICES,**
**Direction de la Propriété Industrielle**
**25, quai Paul Doumer**
**92408 Courbevoie Cedex (FR)**

(56) Documents cités:
**EP-A- 0 190 492**      **EP-A- 0 368 834**
**US-A- 4 065 544**      **US-A- 5 064 803**

• **JOURNAL OF MATERIALS SCIENCE LETTERS vol. 9, no. 10 , Octobre 1990 , LONDON GB pages 1205 - 1206 M.MARIA AMALA SEKAR 'combustion synthesis of fine-particle ceria'**

Remarques:
Le dossier contient des informations techniques présentées postérieurement au dépôt de la demande et ne figurant pas dans le présent fascicule.

## Description

La présente invention a pour objet des agrégats de cristallites d'oxyde cérique. Elle concerne plus particulièrement des systèmes de cristallites d'oxyde cérique aptes à catalyser un combustion poussée des carburants hydrocarbonés surtout lourds (fioul, gazole ).

Elle vise également un procédé d'obtention desdits agrégats et leur utilisation pour réduire l'émission les résidus de combustion.

Lors de la combustion de gazole dans le moteur diesel, les produits carbonés ont tendance à former des suies qui sont réputées nocives tant pour l'environnement que pour la santé.

Il est recherché depuis longtemps des techniques qui permettent de réduire l'émission de ces particules carbonées, qu'on désignera dans la suite de la description sous l'expression de "suies".

Cette recherche est concomitante avec le désir de ne pas augmenter l'émission de monoxyde de carbone et de gaz réputé toxique et mutagène tel que les oxydes d'azote.

De très nombreuses solutions ont été proposées pour réduire ces émissions carbonées. On s'oriente de plus en plus vers l'adaptation au pot d'échappement d'un filtre susceptible d'arrêter la totalité de particules carbonées induites par la combustion des divers combustibles.

Cette technique est toutefois fortement limitée par la capacité de stockage du filtre qu'il faut soit vider, soit brûler. Cette opération de régénération est extrêmement coûteuse à prévoir et à mettre en oeuvre, une des solutions les plus couramment proposées est la combustion de ces suies, combustion qui est provoquée de manière intermittente, soit par un chauffage électrique, soit par l'utilisation d'un combustible allumeur fossile.

Cette technique présente toutefois de nombreux inconvénients dont le moindre n'est pas le risque de choc thermique conduisant à une fracture ou à une fissuration du filtre céramique.

Une solution qui serait satisfaisante consisterait à introduire dans les suies des catalyseurs qui permettent une auto-inflammation fréquente des suies collectées dans le filtre. Pour cela il faut que ces suies présente une température d'auto-inflammation suffisamment basse pour être fréquemment atteint pendant une marche normal du moteur.

C'est pourquoi un des buts de la présente invention est de fournir un agrégat qui permette de jouer un rôle de catalyseur d'auto-inflammation des suies formées lors de la combustion des combustibles carbonés.

Un autre but de la présente invention est de fournir un agrégat qui permette d'abaisser la température d'auto-inflammation des suies mentionnées ci-dessus. Un autre but de la présente invention est de fournir un agrégat de type ci-dessus qui permette de réduire la quantité de suies formées pendant la combustion desdits combustibles lorsqu'il est introduit dans la chambre de combustion.

Un autre but de la présente invention est de fournir un agrégat qui, introduit dans les chambres de combustion, n'augmente pas l'émission d'oxyde d'azote et de monoxyde de carbone.

Un autre but de la présente invention est de fournir un procédé de fabrication et ou d'introduction desdits agrégats dans la chambre de combustion au voisinage des suies.

Un autre but de la présente invention est de fournir un procédé d'application desdits agrégats.

Ces buts et d'autres qui apparaîtront par la suite sont atteints au moyen d'un agrégat de cristallites d'oxyde cérique caractérisé par le fait que la plus grande dimension dudit agrégat est comprise entre 20 Å (2 nanomètres) et 10.000 Å (1.000 nanomètres) de préférence entre 50 Å (5 nanomètres) et 5.000 Å (500 nanomètres) et par le fait que la taille des cristallites mesurée pour le plan (1,1,1) par la technique de Debye et Scherrer est comprise entre 20 et 250 Å (2 à 25 nanomètres) de préférence de 100 à 200 Å (10 à 20 nanomètres).

Il convient de souligner que ces mesures sont des mesures virtuelles et qu'il serait sans doute plus correctes de faire référence à la largeur du pic de rayons X.

C'est la raison pour laquelle on indiquera par la suite la technique pour mesurer la taille de cristallite selon la technique de Scherrer.

Il convient également de souligner que les zéros de position ne sont pas, sauf lorsque cela est expressément indiqué, des chiffres significatifs.

Il est préférable que ces agrégats soient topologiquement le plus proches possible des suies, c'est pourquoi il est souhaitable d'introduire dans la chambre de combustion ou de fabriquer in situ lesdits agrégats de manière que ces agrégats puissent se former simultanément servir de germes aux suies.

Pour être efficace, il convient d'ajouter, ou de former "in situ", de l'oxyde de cérium sous forme d'agrégats spécifiés ci-dessus à une teneur d'au moins 10 ppm par rapport au combustible carboné, de préférence 20 ppm plus avantageusement 50 ppm.

Il est préférable que l'oxyde de cérium ainsi formé présente une granulométrie telle que le $d_{80}$ soit au plus égal à 10.000 Å (1.000 nanomètres), de préférence à 5.000 Å (500 nanométres).

Il est également préférable que le $d_{20}$ soit supérieur à 200 Å (20 nanométres) et de préférence 500 Å (50 nanométres).

Un autre but de la présente invention est de former des suies contenant des agrégats ci-dessus dont la température d'auto-inflammation soit abaissée par rapport à celle sans agrégats .

Ce but est atteint par des suies ayant une granulométrie telle que le le grain présente un $d_{20}$ égal à au moins 100 Ä et que le $d_{80}$ soit au plus égal à 1000 Ä et qui contiennent au moins 0,01%, avantageusement au moins 0,1%, de préférence au moins 0,5 % d'agrégat selon la présente invention.

En général, les grains de suies forment des amas dont le $d_{50}$ est compris entre 2000 et 5000 Ä.

Selon une mise en oeuvre de la présente invention les suies ainsi formées présente une teneur en cérium total comprise entre 1 et 5% en poids, de préférence de 1,5 à 2,5 %.

Ainsi que cela a été mentionné ci-dessus, avantageusement l' agrégat de cristallites est formé lors de la combustion du carburant, ou du combustible, ce dernier étant additionné d'au moins un composé de cérium, de préférence tétravalent sous forme de solution ou de sol .

Lorsque ledit composé du cérium est choisi parmi les composés de cérium IV, il présente en outre l'avantage d'être accessible à des niveaux de forte concentration ce qui réduit la taille du réservoir, dont il a été mention dans l'introduction. Ainsi il est possible d'obtenir de concentration pouvant atteindre 15% en cérium fréquemment 20%, voire 30%.

Un autre avantage des composés tétravalents est une la stabilité supérieure à celle des trivalents.

Les agrégats de cristallites préférées sont ceux obtenus in situ par combustion d'un combustible, ou carburant, (contenant ou non des additifs, comme le gazole) contenant au moins un composé du cérium IV (sous forme de sol ou de solution) tel que par exemple ceux décrits dans la demande de brevet européen déposée au nom de la demanderesse sous le N° 83 401 152.0 ou bien sous le brevet US N° 4 299 20.

Il a été montré au cours de l'étude qui a mené à la présente invention qu'avantageusement ledit composé du cérium IV est choisi parmi les sols.

Pour obtenir une bonne qualité d'agrégat de cristallite on préfère brûler les sols obtenus par dilution, de préférence extemporanée, dans un combustible, ou carburant, d'un sol concentré (au moins 15 à 20% d' oxyde de cérium $(CeO_2)$) dans une fraction pétrolière telle que celle vendue sous la marque Solvesso ® 150 et stabilisé par des acides gras de $C_{15}$ à $C_{25}$ de préférence linéaires tels que les acides oléiques, linoléiques et linoléniques et ou stéarique, la taille hydrodynamique des particules formant le sol étant au plus égale à environ 100 Ä (10 mµ), avantageusement comprise entre 1 et 20 millimicron (millimicron est synonyme de nanomètre).

La concentration en cérium dans le combustible, et notamment le gazole, est avantageusement comprise entre 10 et 200 ppm de préférence entre 50 et 150 ppm.

Un autre but de la présente invention est de fournir un procédé qui permette de réduire la formation de suies lors de la combustion de produits hydrocarbonés et notamment de gazole.

Un autre but de la présente invention est de trouver un procédé qui permette d'abaisser la température d'auto-inflammation de suies.

Ces buts, et d'autres qui apparaîtront par la suite, sont atteints par un procédé de combustion d'un carburant hydrocarboné caractérisé par le fait que l'on introduit dans la chambre de combustion, ou que l'on forme in situ, des agrégats selon la présente invention .

**Partie expérimentale**

**Détermination de la taille des cristallites selon la méthode de Scherrer**

Prolégomènes

La diffraction résulte de l'interaction du rayonnement avec la matière. Quand une onde électromagnétique frappe un atome, ses électrons subissent des vibrations de la même fréquence que l'onde incidente. L'absorption et la re-émission des atomes dans un réseau périodique constituent la diffraction de rayons X. La loi de diffraction de Bragg, qui résulte des conditions optiques et cristallographiques particulières, donne les maxima de l'intensité diffractée. Trois aspects d'un tel maximum intéressent l'analyste: la position du pic, son intensité et sa largeur. Ici, seul le troisième point permet de déterminer certaines caractéristiques de la granulométrie.

1.1.3 Elargissement des pics de diffraction

En l'absence de tout effet perturbateur les pics obtenus devraient être de Dirac. Expérimentalement on n'obtient pas de tels profils, en raison de l'influence de l'appareillage et de la morphologie des cristaux.

En effet, la divergence et la dispersion en longueur d'onde du faisceau incident de rayons X, l'absorption et l'état de surface de l'échantillon, la largeur de la fente d'analyse, etc, sont autant de facteurs d'élargissement dit instrumental.

En outre, la taille et la déformation des cristaux provoquent un élargissement des profils dit intrinsèque. Plus les cristaux sont petits, plus la contribution à l'élargissement du pic est importante. Par contre, l'élargissement est une fonction croissante de la déformation
Le profil expérimental est donc la convolution du profil instrumental et du profil intrinsèque.

## 2. MESURE DE TAILLES DE CRISTALLITES DE L'OXYDE DE CERIUM :

### 2.1 PRINCIPE

Toutes les méthodes de calcul de la taille D des cristallites sont basées sur la caractérisation mathématiques des pics de diffraction. Deux types de paramètres sont principalement utilisés :

-   La largeur à mi-hauteur, FWMH, et/ou la largeur intégrale, b, du pic (largeur d'un rectangle de même hauteur et de même aire que le pic considéré).
-   Les coefficients de Fourier du pic.

Dans le cas présent on utilise la méthode de Sherrer dont le principe est détaillé brièvement dans la suite. Son application nécessite l'élimination préalable de l'élargissement instrumental (puisqu'un profil expérimental de diffraction noté H est la convolution d'un profil instrumental noté G et d'un profil intrinsèque noté F.

#### 2.1.1 Déconvolution

On enregistre le spectre d'un échantillion étalon de taille suffisament importante et de déformation suffisament faible pour que l'élargissement observé soit uniquement instrumental, la nature chimique de l'étalon devant en outre être la plus proche possible de celle des échantillons étudiés.
L'extraction du profil F à partir des profils H et G est alors réalisée manuellement à partir des valeurs des largeurs à mi-hauteur, précédemment déterminées à l'aide d'un logiciel de traitement de spectres.
Pour effectuer la déconvolution, on utilise la formule de GAUSS :

$$FWMH(F)^2 = FWMH(H)^2 - FWMH(G)^2$$

une fois les paramètres caractéristiques du spectre F connus, on peut calculer la taille des cristallites.

#### 2.1.2 Méthode de Sherrer

Dans le cadre de cette méthode, on réalise donc la déconvolution en supposant que les profils sont de Gauss, puis on détermine D, pour chaque raie hkl, par l'application de la fofrmule suivante :

$$D = \frac{K * \lambda}{FWMH(F) * \cos\theta}$$

### 2.2 APPLICATION A LA DETERMINATION DES TAILLES DANS LES EXEMPLES

La taille des cristallites de l'oxyde de cérium a été mesurée dans la direction perpendiculaire au plan d'indices (hkl) = (111) correspondant à la raie la plus intense :

Le calcul de la taille de cristallite a été réalisé selon la méthode de Sherrer à partir des constantes suivantes :

*   constante de Sherrer K = 0.90
*   longueur d'onde utilisée $\lambda$ = 1.542 angström

Les largeurs angulaires (exprimées en radians dans la formule de Sherrer) sont les largeurs à mi-hauteur des pics (111).

Les mesurse ont été réalisées sur diffractomètres Philips PW1700 dont la largeur instrumentale dans cette gamme angulaire est de 0.126 (en degré).

L'erreur est estimée à +/-25 angström

Les exemples non limitatifs suivants illustrent l'invention :

**DESCRIPTION DE LA TECHNIQUE DE PRELEVEMENT DES SUIES :**

La mesure a été réalisée sur des moteurs diesel de 4,4L équipant des Mercedes 240 D, les réglages étant fait selon les spécifications du fabriquant. Les véhicules sont équipés d'une boîte de vitesse manuelle.

Le chassis dynamométrique.simule une inertie de 1300 kilos avec une unité d'absortion de puissance faite par la société SCHENCK type W130.

Les gaz d'échapemement sont refroidis, puis passent au travers d'un piège à particules et enfin, au travers d'un tunnel de dilution sur lequel est greffé un échantillonage de l'échapement avant d'être renvoyé dans l'atmosphère.

L'échantillonage des particules est réalisé sur des filtres d'échantillonage recouverts de téflon et réalisés par la société PALLFLEX PRODUCTS CORP. type 47mm T X 40 H120-WW la température étant réglée de manière à ne pas excéder 52°C.

Le piège à particules est un piège Corning EX 47,5.66" x 6,00" équipé avec 3M interam III dans une boîte métallique. il est placé avant le tunnel de dilution, tunnel sur le quel il est possible de prélever les particule ayant échappé au filtre et recueillie à froid.

**Mesures sur les émissions de particules :**

Les émissions de particules ont été déterminées et évaluées selon la directives 91/441/CEE.

Détermination de la température de régénération :

Les tests ont toujours commencé avec un filtre propre. La température de régénération est mesurée après avoir chargé le piège à particules par trois cycles FTP75 successifs.

Le piège est situé de telle façon que la température maximum enregistrée à l'intérieur du piège pendant la phase d'accumulation des suies, soit inférieure à 230°C.

Pour déterminer la température de régénération le véhicule est mené à une vitesse constante (90 KM/H) en 4ième, à la charge maximum du moteur.

Compte tenu de la spécifité du système d'échappement, la température des gaz d'échapement à l'entrée du piège croît doucement, la perte de charge au travers du piège et la température sont enregistré en fonction du temps.

Pendant cette phase de régénération (en raison de l'état stationaire du moteur) les gaz d'échapement alimentant le piège, présentent une température en augmentation mais une débit massique constant et une teneur en oxygène constante.

la masse de particules accumulées dans le piège pendant la mesure demeure négligeable.

L'augmentation de température et du débit volumique induit une augmentation la perte de charge au travers du piège, jusqu'à ce que la température de régénération soit atteinte.

Pour les augmentations de température ultérieures, la perte de charge reste constante, puis chute. Cela est du à la réduction de la masse des particules accumulées dans le piège. Le piège est nettoyé !

les résultats obtenu par les techniques ci dessus sont rassemblés dans le tableau suivant.
le moteur etant alimente avec des gazoles dont la teneur en cérium est de 100 P.P.M.

Les essais du tableau 1 ont été réalisés sur un certain type de gazole.

les essais du tableau deux ont été réalisés avec un autre type de gazole.
les mesure ont été faites avec la raie $K\alpha$ du cuivre. La largeur de la raie du à l'appareil est de 0,12

TABLEAU 1

| synthese | tailles des suies | taille des agregats en nm | largeur du pic (h,k,l) =(1,1,1) | tailles des cristallites | largeur du pic (h,k,l) =(2,0,0) | tailles des cristallites | Température d'autoin-flamma-tion | observation |
|---|---|---|---|---|---|---|---|---|
| sol organique de diamètre hydrodynamique 10 nm (sol oléique | $d_{50} = 40$ $d_{20} = .15$ $d_{80} = 60$ | $d_{50} = 15$ $d_{20} = 5$ $d_{80} = 200$ | 606 | 138 | 0,572 | 138 Ä | 486 | g |
| blanc | $d_{50} = 40$ $d_{20} = .20$ $d_{80} = 60$ | , | | - | | | 570 | g |

TABLEAU 2

| synthese | tailles des suies | taille des agregats en nm | largeur du pic (h,k,l) =(1,1,1) | tailles des cristallites | largeur du pic (h,k,l) =(2,0,0) | tailles des cristallites | Température d'autoin-flammation | observa-tion |
|---|---|---|---|---|---|---|---|---|
| sol organique de dia-mètre hydrodyna-mique 10 nm (sol oléique) | $d_{50} = 30$ $d_{20} = .15$ $d_{80} = 50$ | | | 230 | | 175 | 495 490 502 493 | |
| sol organique de dia-mètre hydrodyna-mique 100 nm (sol oléique) | $d_{50} = 30$ $d_{20} = .15$ $d_{80} = 50$ | | | > 300 Ä ** | | | 519 (515+505+538)/3 | Hors de l'invention (compara-tif) |
| sels de cériumIV | $d_{50} = 30$ $d_{20} = .15$ $d_{80} = 50$ | | | 220 | | 180 | (472+490+490) 484 | |
| blanc | $d_{50} = 40$ $d_{20} = .20$ $d_{80} = 80$ | | - | - | | | 561 = (561+558+565)/3 | |

** semi-quantitatif

la production de suies et les mesures faites directement sur le véhicule sont très lourdes et necessite beaucoup de temps aussi a-t'on cherché à étudier le phénomène au moyen de suies similaires mais plus simples à obtenir.

I PREPARATION DES SUIES DE LABORATOIRES BRUTES

Un tube céramique est placé dans un four pyrox (VG50/350 4,4KW L=700mm).
A une extrémité est injecté un mélange d'oxygène et d'azote 2/98 en volume à un débit de 300 l/h et du gazole est pulvérisé.
Au centre du four, la température des gaz est de 1200°C.
Les suies sont collectées à l'autre extrémité sur un filtre en fibre de verre "Whatman" maintenu à 180°C.
Après 3 heures de pyrolyse, les suies sont récupérées en grattant le filtre puis broyées.

II PREPARATION DE SUIES DE LABORATOIRE ADDITIVEES

On procéde comme pour les suies de laboratoire brutes, mais le gazole contient un additif métallique tel que la concentration en métal dans le gazole soit comprise entre 100 et 10 000 ppm .
Cette concentration est ajustée de manière que la suie contienne du métal à une concentration similaire à celles observée sur les suies de banc moteur ( soit environ 2%).

III PREPARATION DES SUIES DE LABORATOIRE IMPREGNEES

L'additif étudié est dilué 30 fois dans un solvant volatile kerdane, dichlorométhane, éthanol et/ou eau.
La solution est ajoutée sous agitation à une dispersion de suie de laboratoire brute dispersé dans le même solvant.
Le solvant est évaporé lentement et les suies sont broyées

IV EVALUATION DES SUIES PAR ANALYSE THERMOGRAVIMETRIQUE ATG

L'ATG est une sétaram
Le gaz vecteur est de l'air à un débit de 48ml/mm.
La nacelle contient 20mg de suie.
La température est programmée de 20°C à 900°C à 10°C/mm.
La température, le poids de suies sont enregistrés en fonction du temps.
La vitesse de combustion, obtenue par dérivation du poids en fonction du temps est calculée point par point.
On peut déterminer ainsi :
la température "T max" où la la vitesse de combustion est maximum ;
et la température d'inflammation "T inf" qui est la température à l'intersection de la ligne de base avec la tangente à la courbe masse en fonction du temps à la température T=T max.
les résultats sont rassemblés dans le tableau suivant :

| agent d'imprégnation des, suies | Taille de cristallite | Taille de grain | T inf | T max |
|---|---|---|---|---|
| sol aqueux | 3 à 4 nm | 3 à 4 nm | 355° C | 375 |
| sol organique sol organique de diamètre hydrodynamique 10 nm (sol oléique) | 3 à 5 nm | 3 à 5 nm | 365 | 392 |
| sol plus grossier sol organique de diamètre hydrodynamique 100 nm (sol oléique) | 11nm | 11nm | 375 | 390 |
| sol grossier | - | 30 à 40 | 400 | 430 |

(suite)

| agent d'imprégnation des, suies | Taille de cristallite | Taille de grain | T inf | T max |
|---|---|---|---|---|
| opaline | >50nm | 800nm | 494 | 572 |
| blanc | | | 500 | 580 |

**Revendications**

1.  Oxyde cérique caractérisé par le fait qu'il est sous forme d'agrégats de cristallites d'oxyde cérique, agrégats dont la plus grande dimension est comprise entre 50 Å (5 nanomètres) et 10.000 Å (1.000 nanomètres) de préférence entre 100 Å (10 nanomètres) et 5.000 Å (500 nanomètres), par le fait que la taille des cristallites mesurée pour le plan (1,1,1) par la technique de Debye et Scherrer est comprise entre 50 et 250 Å (5 à 25 nanomètres) de préférence de 100 à 200 Å (10 à 20 nanomètres) et par le fait que le dit oxyde cérique présent une granulométrie telle que son $d_{80}$ soit au plus égal à 10.000 Å, avantageusement à 5000 Å.

2.  Oxyde selon la revendication 1, caractérisé par le fait que le dit oxyde cérique présent une granulométrie telle que son $d_{20}$ soit supérieur à 200 Å, avantageusement à 500 Å.

3.  Oxyde selon les revendications 1 et 2, caractérisé par le fait que l'agrégat de cristallites est formé lors de la combustion du carburant, ce dernier étant additionné d'au moins un composé de cérium.

4.  Oxyde selon les revendications 1 à 3, caractérisé par le fait que ledit composé du cérium est choisi parmi les composés de cérium IV.

5.  Oxyde selon la revendication 4, caractérisé par le fait que ledit composé du cérium IV est choisi parmi les sols

6.  Oxyde selon les revendications 3 à 5, caractérisé par le fait que ledit carburant contenant au moins un composé du cérium IV est choisi parmi les sols obtenus par dilution, de préférence extemporanée, dans un combustible, ou carburant, d'un sol concentré.

7.  Suies ayant une granulométrie telle que le le grain présente un $d_{20}$ égal à au moins 200 Å et que le $d_{80}$ soit au plus égal à 1000 Å caractérisé par le fait que elles contiennent au moins 0,01 %, avantageusement au moins 0,1 %, de préférence au moins 0,5 % d'oxyde selon la revendication 1

8.  Suies selon la revendication 7, caractérisé par le fait que présente une teneur en cérium total au mois égale à 1 % en poids.

9.  Suies selon les revendications 7 et 8, caractérisé par le fait que les grains de su es forment des amas dont le $d_{50}$ est compris entre 2000 et 5000 Å.

10. Procédé de combustion d'un carburant hydrocarboné , caractérisé par le fait que l'on introduit dans la chambre de combustion, ou que l'on forme in situ, des oxydes selon la revendication 1.

**Claims**

1.  Ceric oxide, characterized in that it is in the form of ceric oxide crystallite aggregates, the largest dimension of which aggregates is between 50 Å (5 nanometres) and 10,000 Å (1,000 nanometres), preferably between 100 Å (10 nanometres) and 5000 Å (500 nanometres), in that the size of the crystallites measured in respect of the (111) plane by the Debye-Scherrer technique is between 50 and 250 Å (5 to 25 nanometres), preferably from 100 to 200 Å (10 to 20 nanometres), and in that the said ceric oxide has a particle size such that its $d_{80}$ is at most equal to 10,000 Å, advantageously to 5000 Å.

2.  Oxide according to claim 1, characterized in that the said ceric oxide has a particle size such that its $d_{20}$ is greater than 200 Å, advantageously than 500 Å.

3.  Oxide according to claims 1 and 2, characterized in that the crystallite aggregate is formed during the combustion of fuel, the latter being treated with at least one cerium compound.

4. Oxide according to claims 1 to 3, characterized in that the said cerium compound is chosen from cerium(IV) compounds.

5. Oxide according to claim 4, characterized in that the said cerium(IV) compound is chosen from sols.

6. Oxide according to claims 3 to 5, characterized in that the said fuel containing at least one cerium(IV) compound is chosen from sole obtained by, preferably extemporaneous, dilution of a concentrated sol in a combustible material or fuel.

7. Soots having a particle size such that the grain has a $d_{20}$ equal to at least 200 Å and in that the $d_{80}$ is at most equal to 1000 Å, characterized in that they contain at least 0.01%, advantageously at least 0.1%, preferably at least 0.5% of oxide according to claim 1.

8. Soots according to claim 7, characterized in that they have a total cerium content at least equal to 1% by weight.

9. Soots according to claims 7 and 8, characterized in that the soot grains form masses whose $d_{50}$ is between 2000 and 5000 Å.

10. Process for the combustion of a hydrocarbon fuel, characterized in that oxides according to claim 1 are introduced into the combustion chamber or are formed in situ.

**Patentansprüche**

1. Ceroxid, dadurch gekennzeichnet, daß es in Form von Aggregaten von Ceroxidkristalliten vorliegt, wobei die größte Abmessung der Aggregate zwischen 50 Å (5 nm) und 10000 Å (1000 nm), vorzugsweise zwischen 100 Å (10 nm) und 5000 Å (500 nm) beträgt, daß die Größe der Kristallite, gemessen in der Ebene (1,1,1) durch die Debye-Scherrer-Technik, zwischen 50 und 250 Å (5 bis 25 nm), vorzugsweise 100 bis 200 Å (10 bis 20 nm) beträgt und daß das Ceroxid eine derartige Korngrößenverteilung aufweist, daß dessen $d_{80}$ höchstens 10000 Å, vorteilhafterweise höchstens 5000 Å beträgt.

2. Oxid nach Anspruch 1, dadurch gekennzeichnet, daß das Ceroxid eine derartige Korngrößenverteilung aufweist, daß dessen $d_{20}$ über 200 Å, vorteilhafterweise über 500 Å beträgt.

3. Oxid nach den Ansprüchen 1 und 2, dadurch gekennzeichnet, daß das Aggregat von Kristalliten während der Verbrennung des Brennstoffs gebildet wird, wobei dem letztgenannten mindestens eine Cerverbindung zugesetzt wird.

4. Oxid nach den Ansprüchen 1 bis 3, dadurch gekennzeichnet, daß die Cerverbindung unter den Verbindungen von Cer(IV) ausgewählt wird.

5. Oxid nach Anspruch 4, dadurch gekennzeichnet, daß die Cer(IV)-Verbindung unter den Solen ausgewählt wird.

6. Oxid nach den Ansprüchen 3 bis 5, dadurch gekennzeichnet, daß der mindestens eine Cer(IV)-Verbindung umfassende Brennstoff ausgewählt wird unter den Solen, erhalten durch vorzugsweise unmittelbar vor der Anwendung vorgenommene Verdünnung eines konzentrierten Sols in einem Brennmaterial oder einem Brennstoff.

7. Ruße mit einer solchen Korngrößenverteilung, daß die Körnchen eine $d_{20}$ von mindestens 200 Å aufweisen und daß die $d_{80}$ höchstens 1000 Å beträgt, dadurch gekennzeichnet, daß sie mindestens 0,01%, vorteilhafterweise mindestens 0,1%, vorzugsweise mindestens 0,5% des Oxids nach Anspruch 1 enthalten.

8. Ruße nach Anspruch 7, dadurch gekennzeichnet, daß sie einen Gesamtgehalt an Cer von mindestens 1 Gew.-% enthalten.

9. Ruße nach den Ansprüchen 7 und 8, dadurch gekennzeichnet, daß die Rußkörnchen Massen bilden, deren $d_{50}$ zwischen 2000 und 5000 Å beträgt.

10. Verfahren zur Verbrennung eines kohlenwasserstoffhaltigen Brennstoffs, dadurch gekennzeichnet, daß man in die Verbrennungskammer Oxide nach Anspruch 1 einbringt oder man Oxide nach Anspruch 1 in situ bildet.